(19)

Europäisches
Patentamt
European
Patent Office
Office européen
des brevets

(11) **EP 3 284 969 A1**

(12) **EUROPEAN PATENT APPLICATION**
published in accordance with Art. 153(4) EPC

(43) Date of publication:
**21.02.2018  Bulletin 2018/08**

(21) Application number: **16827744.0**

(22) Date of filing: **15.07.2016**

(51) Int Cl.:
**F16F 15/14** *(2006.01)*        **F16F 15/31** *(2006.01)*

(86) International application number:
**PCT/JP2016/070994**

(87) International publication number:
**WO 2017/014184 (26.01.2017 Gazette 2017/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **17.07.2015  JP 2015143487
19.11.2015  JP 2015226653**

(71) Applicants:
- **Aisin Aw Co., Ltd.**
  **Anjo-shi, Aichi 444-1192 (JP)**
- **NATIONAL UNIVERSITY CORPORATION OITA
  UNIVERSITY**
  **Oita-shi
  Oita 870-1192 (JP)**
- **Kagoshima University**
  **Kagoshima-shi, Kagoshima 890-8580 (JP)**

(72) Inventors:
- **TAKIKAWA, Yoshihiro**
  **Anjo-shi**
  **Aichi 444-1192 (JP)**

- **NAGAI, Hiroki**
  **Anjo-shi**
  **Aichi 444-1192 (JP)**
- **WAJIMA, Masaki**
  **Anjo-shi**
  **Aichi 444-1192 (JP)**
- **SAKAMOTO, Takao**
  **Anjo-shi**
  **Aichi 444-1192 (JP)**
- **RYU, Takahiro**
  **Oita City**
  **Oita 870-1192 (JP)**
- **NAKAE, Takashi**
  **Oita City**
  **Oita 8701-192 (JP)**
- **MATSUZAKI, Kenichiro**
  **Kagoshima-shi**
  **Kagoshima 890-8580 (JP)**

(74) Representative: **Kramer Barske Schmidtchen
Patentanwälte PartG mbB
European Patent Attorneys
Landsberger Strasse 300
80687 München (DE)**

(54) **VIBRATION-DAMPING DEVICE**

(57)     A vibration damping device 20 includes: a crank member 22 that is coupled to a driven member 15 via a first coupling shaft A1 and that is swingable about the first coupling shaft A1 along with rotation of the driven member 15; and an inertial mass body 24 that is coupled to the driven member 15 via the crank member 22 and a connecting rod 23 and that is swung about a center of rotation RC in conjunction with the crank member 22 along with rotation of the driven member 15. A component force of a centrifugal force that acts on the crank member 22 along with rotation of the driven member 15 in a direction that is orthogonal to the direction from the center of the first coupling shaft A1 toward the center of gravity G always acts on the crank member 22 as a restoring force that acts to return the inertial mass body 24 to the center of the swing range. The component force is maximum when the inertial mass body 24 is positioned at the center of the swing range.

Printed by Jouve, 75001 PARIS (FR)

**(Cont. next page)**

# FIG. 2

## Description

TECHNICAL FIELD

The invention according to the present disclosure relates to a vibration damping device that damps vibration of a rotary element.

BACKGROUND ART

There has hitherto been known a damper that includes: a link mechanism that includes a first link serving as a crank member coupled to a crankshaft and a second link serving as a connecting rod coupled to the first link; and an annular inertial body coupled to the second link and coupled so as to be turnable by a predetermined angle relative to the crankshaft via the link mechanism (see Patent Document 1, for example). In the damper, the point of coupling between the crankshaft and the first link is spaced away in the circumferential direction from the point of coupling between the inertial body and the second link, and a mass body is formed on the first link. The first link and the second link of the link mechanism operate to keep a state in which the first link and the second link are balanced with respective centrifugal forces that act thereon when the crankshaft is rotated. Therefore, a force (a force in the rotational direction) that acts to keep the link mechanism in an equilibrium state (balanced state) acts on the inertial body, and such a force causes the inertial body to make motion that is generally similar to that made when the inertial body is coupled to a rotary shaft via a spring member. Consequently, with the link mechanism functioning as a spring member and with the inertial body functioning as a mass body, twisting vibration caused in the crankshaft is reduced.

[Related-art Documents]

[Patent Documents]

[Patent Document 1] Japanese Patent Application Publication No. 2001-263424 (JP 2001-263424 A)

SUMMARY OF THE INVENTION

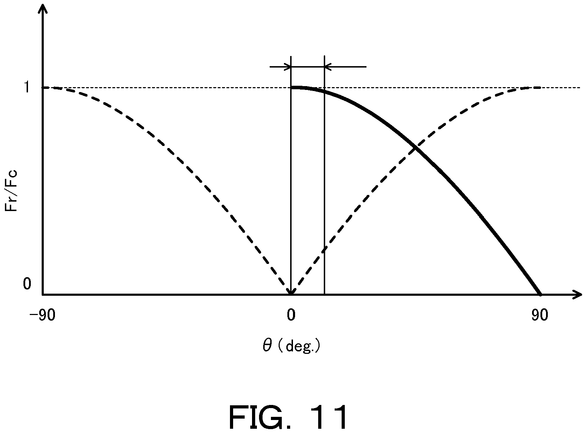

In order for the damper according to the related art to damp targeted vibration well, it is necessary to approximate a vibration order q of the damper, which is represented as q = √(K/M) when the equivalent rigidity and the equivalent mass of the damper are defined as "K" and "M", respectively, to the order of the targeted vibration as much as possible. The equivalent rigidity K of the damper depends on a restoring force that acts to return the first and second links to their positions in the equilibrium state, that is, a component force of a centrifugal force that acts mainly on the first link. In the damper described in Patent Document 1, however, the component force of the centrifugal force is zero at the center of the swing range (see the broken line in FIG. 11), and it is difficult to secure a sufficient restoring force over the entire swing range. If it is attempted to increase the weight of the first link (crank member) or the inertial body in order to increase the restoring force in the damper, an increase in weight or the size of the entire damper may be incurred. In the case where the weight of the first link cannot be increased because of constraints of the weight or the size in the damper, the targeted vibration may not be damped.

Thus, it is a main object of the invention according to the present disclosure to provide a vibration damping device which can improve the vibration damping performance while suppressing an increase in weight or size of the entire device.

The present disclosure provides a vibration damping device that includes: a support member that rotates together with a rotary element, to which torque from an engine is transferred, about a center of rotation of the rotary element; a restoring force generation member that is coupled to the support member via a coupling shaft and that is swingable about the coupling shaft along with rotation of the support member; and an inertial mass body coupled to the support member via the restoring force generation member and swung about the center of rotation in conjunction with the restoring force generation member along with rotation of the support member, the vibration damping device damping vibration of the rotary element, in which when the support member is rotated, a component force of a centrifugal force that acts on the restoring force generation member along with rotation of the support member in a direction that is orthogonal to a direction from a center of the coupling shaft toward a center of gravity of the restoring force generation member always acts on the restoring force generation member as a restoring force that acts to return the inertial mass body to a center of a swing range, and the component force is maximum when the inertial mass body is positioned at the center of the swing range.

In the vibration damping device, a component force of a centrifugal force that acts on the restoring force generation member along with rotation of the support member in a direction that is orthogonal to the direction from the center of the coupling shaft toward the center of gravity of the restoring force generation member acts as a restoring force (moment) that acts to return the inertial mass body to the center of the swing range. The component force is maximum when the inertial mass body is positioned at the center of the swing range. Consequently, the restoring force for the same centrifugal force which acts on the restoring force generation member can be increased over the entire swing range of the restoring force generation member compared to a case where the component force of the centrifugal force which acts on the restoring force generation member in a direction that is orthogonal to the direction from the center of the coupling shaft toward the center of gravity of the restoring force generation member is zero when the inertial mass body is positioned at the center of the swing range. Thus, with the vibration damping device, it is possible to increase the equivalent rigidity of the vibration damping device while suppressing an increase in weight of the restoring force generation member, which can improve the degree of freedom in setting of the equivalent rigidity and the equivalent mass, that is, the vibration order. As a result, it is possible to further improve the vibration damping performance while suppressing an increase in weight or size of the restoring force generation member and hence the entire device.

BRIEF DESCRIPTION OF THE DRAWINGS

[FIG. 1] FIG. 1 is a schematic diagram illustrating a starting device that includes a vibration damping device according to the present disclosure.

[FIG. 2] FIG. 2 is a front view of the vibration damping device according to the present disclosure.

[FIG. 3] FIG. 3 is an enlarged sectional view illustrating an essential portion of the vibration damping device according to the present disclosure.

[FIG. 4] FIG. 4 is an enlarged sectional view illustrating an essential portion of the vibration damping device according to the present disclosure.

[FIG. 5] FIG. 5 is a front view illustrating operation of the vibration damping device according to the present disclosure.

[FIG. 6A] FIG. 6A is a schematic diagram illustrating operation of the vibration damping device according to the present disclosure.

[FIG. 6B] FIG. 6B is a schematic diagram illustrating operation of the vibration damping device according to the present disclosure.

[FIG. 6C] FIG. 6C is a schematic diagram illustrating operation of the vibration damping device according to the present disclosure.

[FIG. 7] FIG. 7 is a schematic diagram illustrating operation of the vibration damping device according to the present disclosure.

[FIG. 8] FIG. 8 is a front view illustrating operation of the vibration damping device according to the present disclosure.

[FIG. 9] FIG. 9 is a schematic diagram illustrating operation of a vibration damping device according to a comparative example.

[FIG. 10A] FIG. 10A is a schematic diagram illustrating operation of the vibration damping device according to the comparative example.

[FIG. 10B] FIG. 10B is a schematic diagram illustrating operation of the vibration damping device according to the comparative example.

[FIG. 10C] FIG. 10C is a schematic diagram illustrating operation of the vibration damping device according to the comparative example.

[FIG. 11] FIG. 11 is a chart illustrating the relationship between the vibration angle of a restoring force generation member included in the vibration damping device according to the present disclosure and the ratio of a restoring force to a centrifugal force that acts on the restoring force generation member.

[FIG. 12] FIG. 12 is a schematic diagram illustrating operation of the vibration damping device according to the present disclosure.

[FIG. 13] FIG. 13 is a schematic diagram illustrating operation of the vibration damping device according to the comparative example.

[FIG. 14] FIG. 14 is a chart illustrating the results of analyzing the relationship between the vibration angle of a mass body about the center of rotation and the order of vibration damped by the vibration damping device according to the present disclosure.

[FIG. 15] FIG. 15 is a schematic diagram illustrating a vibration damping device according to a modification of the present disclosure.

[FIG. 16] FIG. 16 is a schematic diagram illustrating a modification of a damper device that includes the vibration damping device according to the present disclosure.

[FIG. 17] FIG. 17 is a schematic diagram illustrating another modification of the damper device which includes the vibration damping device according to the present disclosure.

MODES FOR CARRYING OUT THE INVENTION

Now, an embodiment of the invention according to the present disclosure will be described with reference to the drawings.

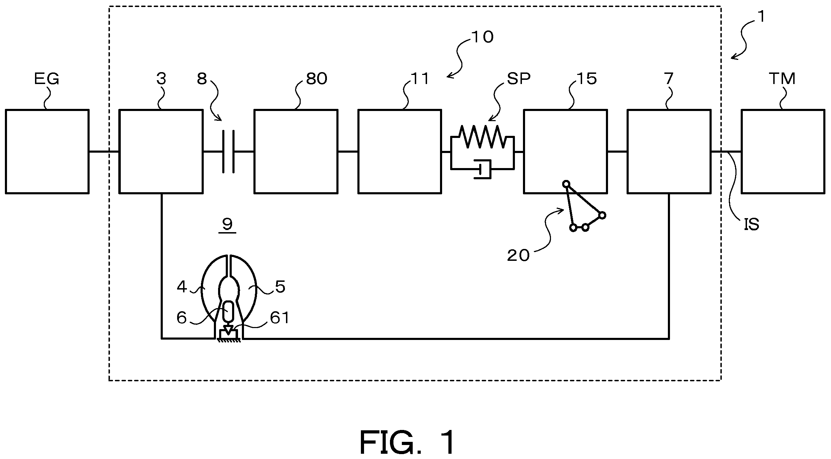

FIG. 1 is a schematic diagram illustrating a starting device 1 that includes a vibration damping device 20 according to the present disclosure. The starting device 1 illustrated in the drawing is mounted on a vehicle that includes an engine (internal combustion engine) EG that serves as a drive device (motor), for example. In addition to the vibration damping device (four-node link vibration absorption device) 20, the starting device 1 includes: a front cover 3 that serves as an input member coupled to a crankshaft of the engine EG; a pump impeller (input-side fluid transmission element) 4 fixed to the front cover 3 to rotate together with the front cover 3; a turbine runner (output-side fluid transmission element) 5 that is rotatable coaxially with the pump impeller 4; a damper hub 7 that serves as an output member fixed to an input shaft IS of a transmission (power transfer device) TM that is an automatic transmission (AT), a continuously variable transmission (CVT), a dual clutch transmission (DCT), a hybrid transmission, or a speed reducer; a lock-up clutch 8 that is a hydraulic single-plate clutch, for example; a damper device 10; and so forth.

In the following description, unless specifically stated, the term "axial direction" basically indicates the direction of extension of the center axis (axis) of the starting device 1 or the damper device 10 (vibration damping device 20). In addition, unless specifically stated, the term "radial direction" basically indicates the radial direction of the starting device 1, the damper device 10, or a rotary element of the damper device 10 etc., that is, the direction of extension of a line that extends in directions (radial directions) that are orthogonal to the center axis of the starting device 1 or the damper device 10 from the center axis. Furthermore, unless specifically stated, the term "circumferential direction" basically indicates the circumferential direction of the starting device 1, the damper device 10, or a rotary element of the damper device 10 etc., that is, a direction along the rotational direction of such a rotary element.

The pump impeller 4 has a pump shell (not illustrated) tightly fixed to the front cover 3, and a plurality of pump blades (not illustrated) disposed on the inner surface of the pump shell. The turbine runner 5 has a turbine shell (not illustrated), and a plurality of turbine blades (not illustrated) disposed on the inner surface of the turbine shell. The inner peripheral portion of the turbine shell is fixed to the damper hub 7 via a plurality of rivets.

The pump impeller 4 and the turbine runner 5 face each other. A stator 6 is disposed between and coaxially with the pump impeller 4 and the turbine runner 5. The stator 6 adjusts a flow of working oil (working fluid) from the turbine runner 5 to the pump impeller 4. The stator 6 has a plurality of stator blades (not illustrated). The rotational direction of the stator 6 is set to only one direction by a one-way clutch 61. The pump impeller 4, the turbine runner 5, and the stator 6 form a torus (annular flow passage) that allows circulation of working oil, and function as a torque converter (fluid transmission apparatus) with a torque amplification function. It should be noted, however, that the stator 6 and the one-way clutch 61 may be omitted from the starting device 1, and that the pump impeller 4 and the turbine runner 5 may function as a fluid coupling.

The lock-up clutch 8 can establish and release lock-up in which the front cover 3 and the damper hub 7 are coupled to each other via the damper device 10. In the present embodiment, the lock-up clutch 8 is constituted as a hydraulic single-plate clutch, and has a lock-up piston 80 (not illustrated) disposed inside the front cover 3 and in the vicinity of the inner wall surface of the front cover 3 on the engine EG side and fitted so as to be movable in the axial direction with respect to the damper hub 7. A friction material is affixed to surfaces of the lock-up piston 80 on the outer peripheral side and on the front cover 3 side. A lock-up chamber (not illustrated) is defined between the lock-up piston 80 and the front cover 3. The lock-up chamber is connected to a hydraulic control device (not illustrated) via a working oil supply passage and an oil passage formed in the input shaft IS.

Working oil from the hydraulic control device, which is supplied radially outward from the side near the axis of the pump impeller 4 and the turbine runner 5 (the vicinity of the one-way clutch 61) to the pump impeller 4 and the turbine runner 5 (torus) via the oil passage which is formed in the input shaft IS etc., can flow into the lock-up chamber of the lock-up clutch 8. Thus, if the pressure in a fluid transmission chamber 9 defined by the front cover 3 and the pump shell of the pump impeller 4 and the pressure in the lock-up chamber are kept equal to each other, the lock-up piston 80 is not moved toward the front cover 3, and the lock-up piston 80 is not frictionally engaged with the front cover 3. If the pressure in the lock-up chamber is decreased by the hydraulic control device (not illustrated), in contrast, the lock-up piston 80 is moved toward the front cover 3 by a pressure difference to be frictionally engaged with the front cover 3. Consequently, the front cover 3 (engine EG) is coupled to the damper hub 7 via the damper device 10. A hydraulic multi-plate clutch that includes at least one friction engagement plate (a plurality of friction materials) may be adopted as the lock-up clutch 8.

As illustrated in FIG. 1, the damper device 10 includes, as rotary elements, an annular drive member (input element) 11 coupled to the lock-up piston 80 of the lock-up clutch 8 so as to rotate therewith, and an annular driven member (output element) 15 coupled to the input shaft IS of the transmission TM. The damper device 10 also includes a plurality of (e.g. four in the present embodiment) springs (elastic bodies) SP disposed at intervals in the circumferential direction on the same circumference. Arc coil springs, which are made of a metal material wound so as to have an axis that extends arcuately when no load is applied, or straight coil springs, which are made of a metal material spirally wound so as to have an axis that extends straight when no load is applied, are adopted as the springs SP. Alternatively, so-called double springs may be adopted as the springs SP.

The drive member 11, which is an input element of the damper device 10, includes: an annular first input plate member disposed in proximity to the lock-up piston 80 (front cover 3); and an annular second input plate member disposed close to the pump impeller 4 and the turbine runner 5 and away from the lock-up piston 80 with respect to the first input plate member and coupled to the first input plate member via a plurality of rivets (neither of which is illustrated).

The first input plate member is rotatably supported by the damper hub 7, and coupled to the lock-up piston 80 so as to rotate therewith. In addition, the first input plate member has: a plurality of (e.g. four in the present embodiment) outer spring support portions that support (guide) the outer peripheral portions of the associated springs SP from the front cover 3 (engine EG) side; a plurality of (e.g. four in the present embodiment) inner spring support portions that support (guide) the inner peripheral portions of the associated springs SP from the front cover 3 side; and a plurality of (e.g. four in the present embodiment) spring abutment portions (none of which is illustrated). The second input plate member has: a plurality of (e.g. four in the present embodiment) outer spring support portions that support (guide) the outer peripheral portions of the associated springs SP from the turbine runner 5 (transmission TM) side; a plurality of (e.g. four in the present embodiment) inner spring support portions that support (guide) the inner peripheral portions of the associated springs SP from the turbine runner 5 side; and a plurality of (e.g. four in the present embodiment) spring abutment portions (none of which is illustrated).

When the first and second input plate members are coupled to each other, the outer spring support portions of the first input plate member face the respective outer spring support portions of the second input plate member, and the inner spring support portions of the first input plate member face the respective inner spring support portions of the second input plate member. The springs SP are supported by the first and second input plate members which constitute the drive member 11, and are arranged at intervals (equal intervals) in the circumferential direction in the vicinity of the inner peripheral portion of the turbine shell, for example. With the damper device 10 in the attached state, in addition, the spring abutment portions of the first and second input plate members are provided between the springs SP which are adjacent to each other to abut against the end portions of such springs SP.

The driven member 15 is disposed between the first input plate member and the second input plate member of the drive member 11, and fixed to the damper hub 7 together with the turbine shell of the turbine runner 5 via a plurality of rivets or by welding. Consequently, the driven member 15 is coupled to the input shaft IS of the transmission TM via the damper hub 7. In addition, the driven member 15 has a plurality of (e.g. four in the present embodiment) spring abutment portions (not illustrated) that can abut against the end portions of the associated springs SP. With the damper device 10 in the attached state, the spring abutment portions of the driven member 15 are provided between the springs SP which are adjacent to each other to abut against the end portions of such springs SP. Consequently, the driven member 15 is coupled to the drive member 11 via the plurality of springs SP which act in parallel with each other.

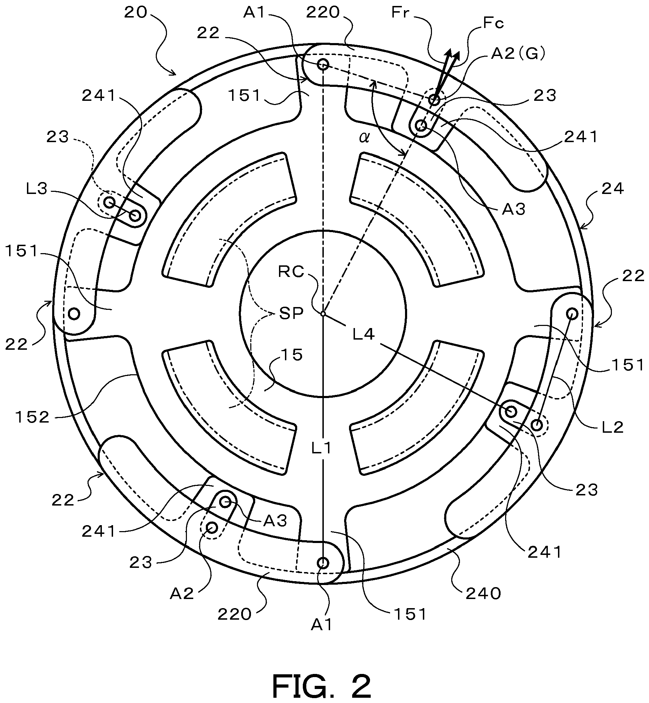

The vibration damping device 20 is coupled to the driven member 15 of the damper device 10, and disposed inside the fluid transmission chamber 9 which is filled with working oil. As illustrated in FIGS. 2 to 4, the vibration damping device 20 includes: the driven member 15 which serves as a support member (first link); a plurality of (e.g. four in the present embodiment) crank members 22 that serve as a restoring force generation member (second link); a plurality of (e.g. a total of eight in the present embodiment) connecting rods 23 that serve as a connecting member (third link); and a single annular inertial mass body (fourth link) 24.

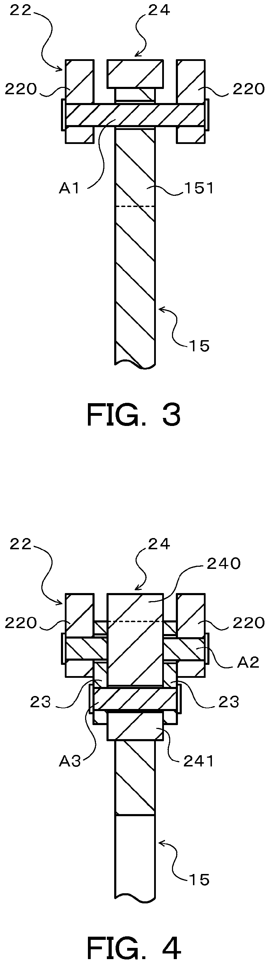

The driven member 15 has a plurality of (e.g. four in the present embodiment) projecting support portions 151 formed at intervals (equal intervals) in the circumferential direction to project radially outward from the outer periphery of the driven member 15. A first end portion of each crank member 22 is rotatably coupled to a corresponding one of the projecting support portions 151 of the driven member 15. In the present embodiment, as illustrated in FIG. 3, each of the crank members 22 has two plate members 220. The plate members 220 are formed from a metal plate so as to have an arcuate planar shape, and the radius of curvature of the outer peripheral edges of the plate members 220 is determined to be the same as the radius of curvature of the outer peripheral edge of the inertial mass body 24.

The two plate members 220 face each other in the axial direction of the damper device 10 via the associated projecting support portion 151 and the inertial mass body 24, and are coupled to each other via a first coupling shaft A1. In the present embodiment, the first coupling shaft A1 is inserted through a coupling hole (circular hole) formed in the projecting support portion 151 of the driven member 15, and both end portions of the first coupling shaft A1 are supported by first end portions of the associated plate members 220. Consequently, each of the crank members 22 (two plate members 220) is coupled (pinned) to the driven member 15 so as to be rotatable, that is, swingable, about the first coupling shaft A1. A bearing such as a ball bearing may be disposed in at least one of a space between the plate members 220 and the first coupling shaft A1 and a space between the projecting support portion 151 and the first coupling shaft A1.

Each of the connecting rods 23 is formed from a metal plate to be narrow in width. As illustrated in FIG. 4, two connecting rods 23 are provided for each of the crank members 22. That is, one connecting rod 23 is interposed between one of the plate members 220 that constitute the crank member 22 and the inertial mass body 24 in the axial direction, and one connecting rod 23 is interposed between the other plate member 220 that constitute the crank member 22 and the inertial mass body 24 in the axial direction. A first end (end portion on the radially outer side) of each connecting rod 23 is rotatably coupled (pinned) to a corresponding one of the plate members 220 via a second coupling shaft A2.

In the present embodiment, the second coupling shaft A2 is disposed such that the center thereof extends coaxially with a line that passes through a center of gravity G of the crank member 22 (around the center portion of the plate member 220 in the longitudinal direction). Consequently, the length from the center of the first coupling shaft A1, which couples the driven member 15 (projecting support portion 151) and the crank member 22 to each other, to the center of gravity G of the crank member 22 coincides with the length (interaxial distance) from the center of the first coupling shaft A1 to the center of the second coupling shaft A2, which couples the crank member 22 and the connecting rod 23 to each other. In addition, the second end portion of the crank member 22 (plate members 220) is positioned on the opposite side of the second coupling shaft A2 from the first coupling shaft A1. A bearing such as a ball bearing may be disposed in at least one of a space between the plate members 220 and the second coupling shaft A2 and a space between the connecting rods 23 and the second coupling shaft A2.

The inertial mass body 24 is an annular member formed from a metal plate. As illustrated in FIGS. 2 to 4, the inertial mass body 24 has: a short cylindrical (annular) main body 240; and a plurality of (e.g. four in the present embodiment) projecting portions 241 provided at intervals (equal intervals) in the circumferential direction to project radially inward from the inner peripheral surface of the main body 240. The weight of the inertial mass body 24 is determined to be sufficiently larger than the weight of one crank member 22, and to be sufficiently larger than the weight of one connecting rod 23. As illustrated in FIG. 2, the projecting portions 241 of the inertial mass body 24 are disposed away from the projecting support portions 151 of the driven member 15 in the circumferential direction, and each held by two connecting rods 23 from both sides in the axial direction. In addition, each of the projecting portions 241 has a coupling hole (circular hole), and rotatably coupled (pinned) to second ends of (end portions on the radially inner side) of the two connecting rods 23 on both sides via a third coupling shaft A3 inserted through the coupling hole. Consequently, the inertial mass body 24 is coupled to the driven member 15 which serves as the support member via the plurality of connecting rods 23 and the plurality of crank members 22. A bearing such as a ball bearing may be disposed in at least one of a space between the connecting rods 23 and the third coupling shaft A3 and a space between the projecting portion 241 and the third coupling shaft A3.

In the present embodiment, further, the inner peripheral surface of the main body 240 of the inertial mass body 24 is in sliding contact with the outer peripheral surfaces of the projecting support portions 151 of the driven member 15, and the inner peripheral surfaces of the projecting portions 241 of the inertial mass body 24 are in sliding contact with portions of an outer peripheral surface 152 of the driven member 15 between the projecting support portions 151 which are adjacent to each other. Consequently, the inertial mass body 24 which is annular is supported (aligned) by the driven member 15 such that the center of the inertial mass body 24 coincides with a center of rotation RC of the driven member 15 which is fixed to the damper hub 7, and is rotatable about the center of rotation RC. It is possible to make the vibration damping device 20 compact by rotatably supporting the inertial mass body 24 using the driven member 15 (support member) in this way. In order to rotatably support the inertial mass body 24 using the driven member 15, it is only necessary that at least one of the inner peripheral surface of the main body 240 and the inner peripheral surfaces of the projecting portions 241 should be in sliding contact with the driven member 15.

In the vibration damping device 20, the driven member 15, which serves as the first link (rotary element) which is rotated by power from the engine EG, and the crank member 22, which is rotatably coupled to the driven member 15, constitute a turning pair. In addition, the crank member 22 and the connecting rods 23, which are rotatably coupled to the crank member 22, constitute a turning pair. Furthermore, the inertial mass body 24 is rotatably coupled to the connecting rods 23 to constitute a turning pair with the connecting rods 23, and rotatably supported by the driven member 15 to constitute a turning pair with the driven member 15. That is, the driven member 15, the crank members 22, the connecting rods 23, and the inertial mass body 24 constitute a four-node rotary link mechanism in which the driven member 15 serves as a fixed node.

As illustrated in FIG. 2, in addition, when the length (the interaxial distance between the center of rotation RC and the first coupling shaft A1) from the center of rotation RC of the driven member 15 to the center of the first coupling shaft A1 which couples the driven member 15 and the crank member 22 (plate members 220) to each other is defined as "L1", the length (the interaxial distance between the first coupling shaft A1 and the second coupling shaft A2) from the center of the first coupling shaft A1 to the center of the second coupling shaft A2 which couples the crank member 22 (plate members 220) and the connecting rods 23 to each other is defined as "L2", the length (the interaxial distance between the second coupling shaft A2 and the third coupling shaft A3) from the center of the second coupling shaft A2 to the center of the third coupling shaft A3 which couples the connecting rods 23 and the inertial mass body 24 to each other is defined as "L3", and the length (the interaxial distance between the third coupling shaft A3 and the center of rotation RC) from the center of the third coupling shaft A3 to the center of rotation RC is defined as "L4", the driven member 15, the crank members 22, the connecting rods 23, and the inertial mass body 24 are configured to meet the relationship L1 + L2 > L3 + L4.

Furthermore, the connecting rods 23 are configured such that the interaxial distance L3 between the second coupling shaft A2 and the third coupling shaft A3 is shorter than the interaxial distances L1, L2, and L4, and as short as possible in the range in which operation of the crank members 22, the connecting rods 23, and the inertial mass body 24 is not hindered. In addition, the driven member 15 which serves as the first link is configured such that the interaxial distance L1 between the center of rotation RC and the first coupling shaft A1 is longer than the interaxial distances L2, L3, and L4. Consequently, in the vibration damping device 20 according to the present embodiment, the relationship L1 > L4 > L2 > L3 is met, and the driven member 15, the crank members 22, the connecting rods 23, and the inertial mass body 24 constitute a double lever mechanism in which the driven member 15 which faces the connecting rods 23 as the shortest links serves as a fixed node. Additionally, in the vibration damping device 20 according to the present embodiment, when the length from the center of the first coupling shaft A1 which couples the driven member 15 and the crank member 22 to each other to the center of gravity G of the crank member 22 is defined as "Lg", the relationship Lg = L2 is met.

In addition, the "equilibrium state (balanced state)" of the vibration damping device 20 corresponds to a state in which the resultant force of the total of centrifugal forces that act on the constituent elements of the vibration damping device 20 and forces that act on the nodes (the centers of the coupling shafts A1, A2, and A3 and the center of rotation RC) of the vibration damping device 20 is zero. When the vibration damping device 20 is in the equilibrium state, as illustrated in FIG. 2, the center of the second coupling shaft A2 which couples the crank member 22 and the connecting rods 23 to each other, the center of the third coupling shaft A3 which couples the connecting rods 23 and the inertial mass body 24 to each other, and the center of rotation RC of the driven member 15 are positioned on one line, and the inertial mass body 24 is positioned at the center of the swing range thereof. Furthermore, the vibration damping device 20 according to the present embodiment is configured so as to meet 60° ≤ α ≤ 120°, more preferably 70° ≤ α ≤ 90°, when the angle formed by the direction from the center of the first coupling shaft A1 toward the center of the second coupling shaft A2 and the direction from the center of the second coupling shaft A2 toward the center of rotation RC in the equilibrium state in which the center of the second coupling shaft A2, the center of the third coupling shaft A3, and the center of rotation RC are positioned on one line is defined as "α" (see FIG. 2).

In the starting device 1 which includes the damper device 10 and the vibration damping device 20, when lock-up is released by the lock-up clutch 8, as seen from FIG. 1, torque (power) from the engine EG which serves as a motor is transferred to the input shaft IS of the transmission TM via a path that includes the front cover 3, the pump impeller 4, the turbine runner 5, and the damper hub 7. Meanwhile, when lock-up is established by the lock-up clutch 8, as seen from FIG. 1, torque (power) from the engine EG is transferred to the input shaft IS of the transmission TM via a path that includes the front cover 3, the lock-up clutch 8 (lock-up piston 80), the drive member 11, the springs SP, the driven member 15, and the damper hub 7.

When the drive member 11 which is coupled to the front cover 3 by the lock-up clutch 8 is rotated along with rotation of the engine EG while lock-up is established by the lock-up clutch 8, the spring abutment portions of the drive member 11 press first ends of the associated springs SP, and second ends of the springs SP press the associated spring abutment portions of the driven member 15. Consequently, torque from the engine EG transferred to the front cover 3 is transferred to the input shaft IS of the transmission TM, and fluctuations in torque from the engine EG are damped (absorbed) mainly by the springs SP of the damper device 10.

In the starting device 1, further, when the damper device 10, which is coupled to the front cover 3 by the lock-up clutch 8 along with establishment of lock-up, is rotated together with the front cover 3, the driven member 15 of the damper device 10 is also rotated in the same direction as the front cover 3 about the axis of the starting device 1. Along with rotation of the driven member 15, the crank members 22, the connecting rods 23, and the inertial mass body 24 which constitute the vibration damping device 20 are swung with respect to the driven member 15, and accordingly vibration transferred from the engine EG to the driven member 15 is damped also by the vibration damping device 20. That is, the vibration damping device 20 is configured such that the order (vibration order q) of swing of the crank members 22 and the inertial mass body 24 coincides with the order of vibration transferred from the engine EG to the driven member 15 (1.5 order in the case where the engine EG is e.g. a three-cylinder engine, and second order in the case where the engine EG is e.g. a four-cylinder engine), and damps vibration transferred from the engine EG to the driven member 15 irrespective of the rotational speed of the engine EG (driven member 15). Consequently, it is possible to damp vibration significantly well using both the damper device 10 and the vibration damping device 20 while suppressing an increase in weight of the damper device 10.

Next, operation of the vibration damping device 20 will be described in detail.

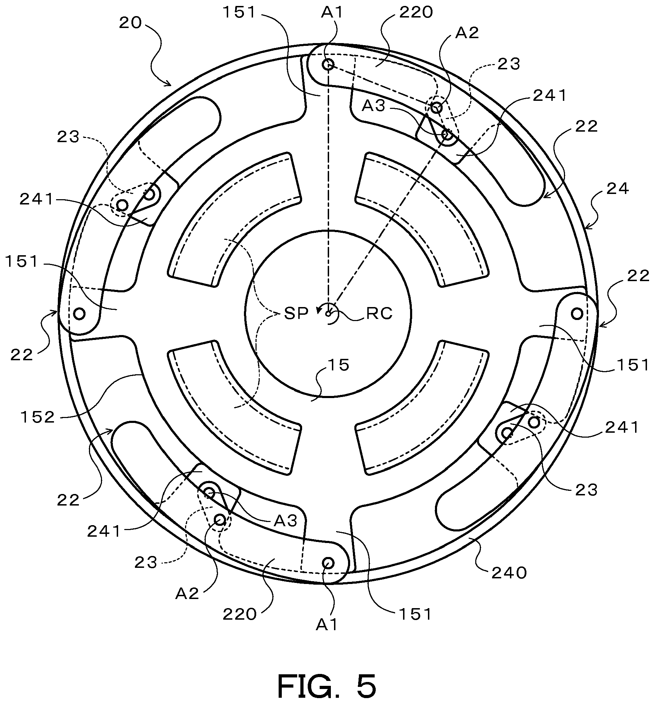

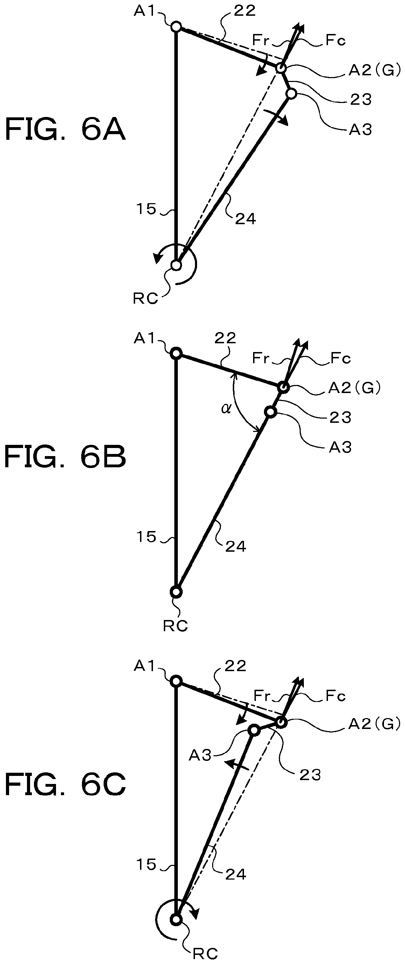

As discussed above, the driven member 15, the crank members 22, the connecting rods 23, and the inertial mass body 24 which constitute the vibration damping device 20 constitute a four-node rotary link mechanism, that is, a double lever mechanism, that meets the relationship L1 + L2 > L3 + L4. Thus, when the driven member 15 is rotated in one direction (e.g. the counterclockwise direction in FIG. 5) about the center of rotation RC as illustrated in FIG. 5, the crank members 22 are rotated in the direction opposite to the driven member 15 (e.g. the clockwise direction in FIGS. 5 and 6A) about the first coupling shaft A1 from the position in the equilibrium state (see the dash-and-dot line in FIG. 6A) because of the moment of inertia (difficulty of rotation) of the inertial mass body 24 as illustrated in FIGS. 5 and 6A. When motion of each of the crank members 22 is transferred to the inertial mass body 24 via the second coupling shaft A2 and the connecting rods 23, further, the inertial mass body 24 is rotated in the direction opposite to the driven member 15 (the same direction as the crank members 22, i.e. the clockwise direction in the drawings) about the center of rotation RC from the position in the equilibrium state, that is, the center of the swing range.

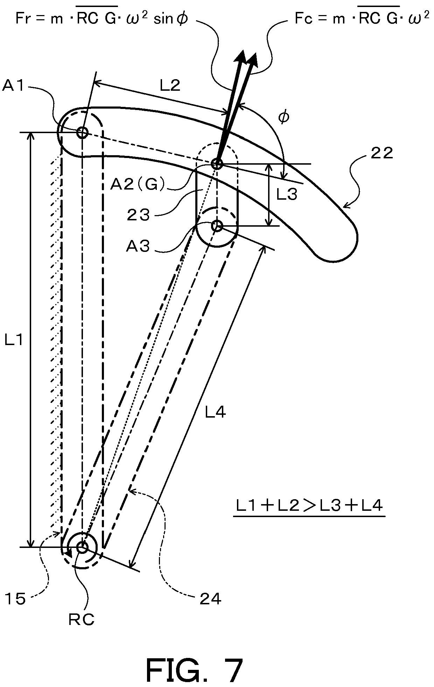

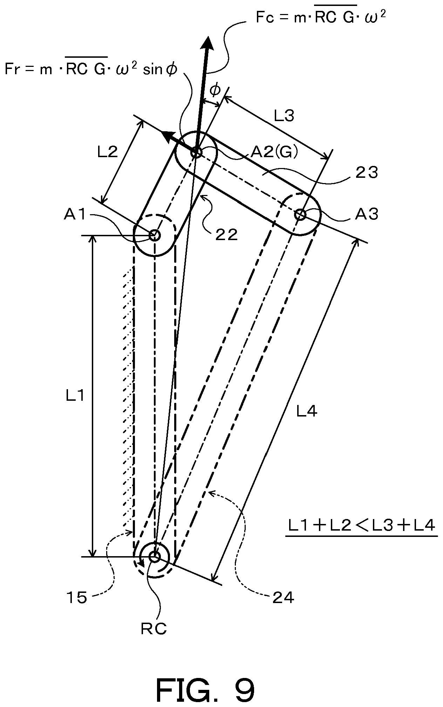

When the driven member 15 is rotated, in addition, a centrifugal force Fc acts on each of the crank members 22 (center of gravity G) as illustrated in FIG. 7. A component force (= Fc·sinφ) of the centrifugal force Fc in a direction that is orthogonal to the direction from the center of the first coupling shaft A1 toward the center of gravity G of the crank member 22 serves as a restoring force Fr that acts to return the crank member 22 (vibration damping device 20) to the position in the equilibrium state. The restoring force Fr which acts on each of the crank members 22 is transferred to the inertial mass body 24 via the second coupling shaft A2 and the connecting rod 23. It should be noted, however, that "$\phi$" is the angle formed by the direction of the centrifugal force Fc which acts on the crank member 22 and the direction from the center of the first coupling shaft A1 toward the center of gravity G (the center of the second coupling shaft A2) of the crank member 22. In FIG. 7, in addition, "m" denotes the weight of the crank member 22, and "$\omega$" denotes the rotational angular velocity of the driven member 15 (the same applies to FIG. 9).

The restoring force Fr which acts on each of the crank members 22 comes to overcome a force (moment of inertia) that acts to rotate the crank member 22 and the inertial mass body 24 in the rotational direction in which the crank member 22 and the inertial mass body 24 have been rotated so far, at a turn-back position (see the solid line in FIG. 6A) at which the crank member 22 has been rotated in one direction (the clockwise direction in FIG. 6A) about the first coupling shaft A1 from the position in the equilibrium state, that is, a turn-back position determined in accordance with the amplitude (vibration level) of vibration transferred from the engine EG to the driven member 15. Consequently, each of the crank members 22 is rotated in the direction opposite to the direction in which the crank member 22 has been rotated so far about the first coupling shaft A1, and returned to the position in the equilibrium state illustrated in FIG. 6B from the turn-back position. In addition, the inertial mass body 24 is rotated in the direction opposite to the direction in which the inertial mass body 24 has been rotated so far about the center of rotation RC in conjunction with each of the crank members 22, and returned to the position in the equilibrium state (the center of the swing range) illustrated in FIG. 6B from one end of the swing range which is determined in accordance with the vibration angle (swing range) of the crank member 22.

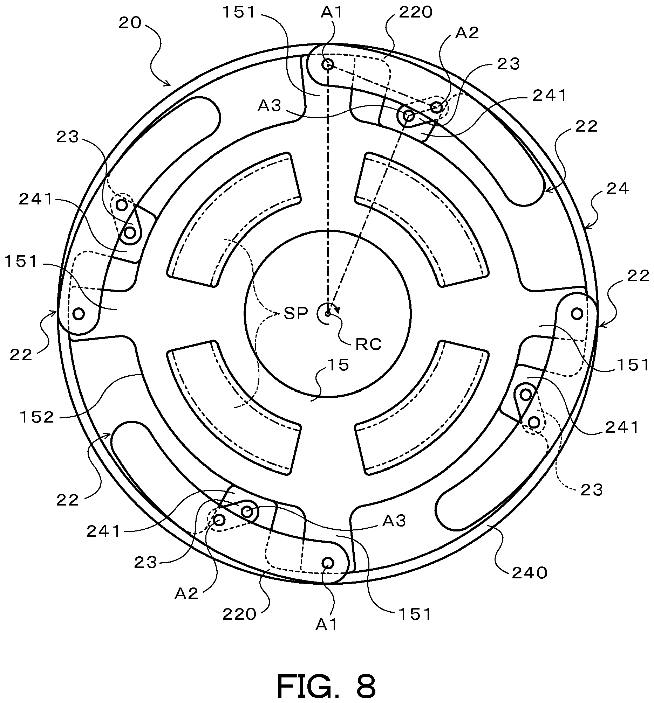

Furthermore, when the driven member 15 is rotated in the other direction (e.g. the clockwise direction in FIG. 8) about the center of rotation RC by vibration from the engine EG transferred via the drive member 11 etc. as illustrated in FIG. 8, each of the crank members 22 is rotated in the same direction as the driven member 15 (e.g. the clockwise direction in FIGS. 6C and 8) about the first coupling shaft A1 from the position in the equilibrium state (see the dash-and-dot line in FIG. 6C) because of the moment of inertia (difficulty of rotation) of the inertial mass body 24 as illustrated in FIGS. 6C and 8. In this event, since the vibration damping device 20 is configured to meet the relationship L1 + L2 > L3 + L4, the inertial mass body 24 is rotated in the direction opposite to the driven member 15 and the crank members 22 (e.g. the counterclockwise direction in FIGS. 6C and 8) about the center of rotation RC of the driven member 15 from the position in the equilibrium state (the center of the swing range) as illustrated in FIGS. 6C and 8 with motion of the crank members 22 transferred to the inertial mass body 24 via the connecting rods 23.

In this case as well, the centrifugal force Fc acts on each of the crank members 22 (center of gravity G), and a component force of the centrifugal force Fc which acts on each of the crank members 22, that is, the restoring force Fr, is transferred to the inertial mass body 24 via the second coupling shaft A2 and the connecting rods 23. The restoring force Fr which acts on each of the crank members 22 comes to overcome a force (moment of inertia) that acts to rotate the crank member 22 and the inertial mass body 24 in the rotational direction in which the crank member 22 and the inertial mass body 24 have been rotated so far, at a turn-back position (see the solid line in FIG. 6C) at which the crank member 22 has been rotated in one direction (the clockwise direction in FIG. 6C) about the first coupling shaft A1 from the position in the equilibrium state, that is, a turn-back position determined in accordance with the amplitude (vibration level) of vibration transferred from the engine EG to the driven member 15. Consequently, each of the crank members 22 is rotated in the direction opposite to the direction in which the crank member 22 has been rotated so far about the first coupling shaft A1, and returned to the position in the equilibrium state illustrated in FIG. 6B from the turn-back position. In addition, the inertial mass body 24 is rotated in the direction opposite to the direction in which the inertial mass body 24 has been rotated so far about the center of rotation RC in conjunction with each of the crank members 22, and returned to the position in the equilibrium state (the center of the swing range) illustrated in FIG. 6B from the other end of the swing range which is determined in accordance with the vibration angle (swing range) of the crank member 22.

In this way, when the driven member 15 is rotated in one direction, each of the crank members 22, which serves as a restoring force generation member, of the vibration damping device 20 is swung (makes reciprocal rotational motion) about the first coupling shaft A1 between the position in the equilibrium state and the turn-back position which is determined in accordance with the amplitude (vibration level) of vibration transferred from the engine EG to the driven member 15, and the inertial mass body 24 is swung (makes reciprocal rotational motion) in the direction opposite to the driven member 15 about the center of rotation RC within the swing range which is determined in accordance with the vibration angle (swing range) of the crank member 22 and which is centered on the position in the equilibrium state. That is, while each of the crank members 22 makes motion of moving from the position in the equilibrium state to the turn-back position and returning from the turn-back position to the position in the equilibrium state twice, the inertial mass body 24 moves from the position in the equilibrium state to one end of the swing range, thereafter returns to the position in the equilibrium state, further moves to the other end of the swing range, and thereafter returns to the position in the equilibrium state. Consequently, vibration that is opposite in phase to vibration transferred from the engine EG to the drive member 11 is applied from the inertial mass body 24 which is swung to the driven member 15 via the connecting rods 23 and the crank members 22, so that it is possible to damp vibration of the driven member 15.

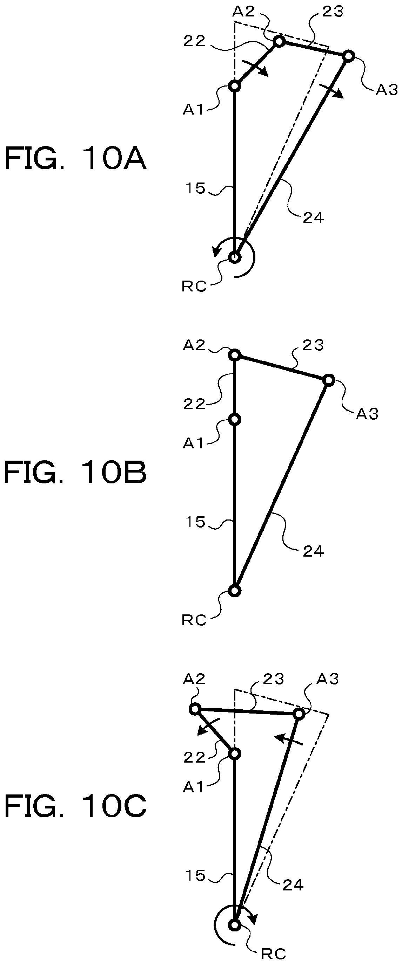

Here, in a vibration damping device that does not meet the relationship L1 + L2 > L3 + L4, that is, a vibration damping device (see FIG. 9) according to a comparative example that meets the relationship L1 + L2 < L3 + L4 as with the damper device described in Patent Document 1, the crank member 22 is always swung (makes reciprocal rotational motion) in the direction opposite to the driven member 15 about the first coupling shaft A1 within the swing range which is centered on the position in the equilibrium state, as with the inertial mass body 24, as illustrated in FIGS. 10A, 10B, and 10C. Furthermore, in the vibration damping device according to the comparative example, a component force of the centrifugal force which acts on the crank member 22 in a direction that is orthogonal to the direction from the center of the first coupling shaft A1 toward the center of gravity G of the crank member 22 is zero in the equilibrium state illustrated in FIG. 10B. That is, in the vibration damping device according to the comparative example, the restoring force Fr which acts on the crank member 22 which is swung in the swing range which is centered on the position in the equilibrium state is zero (minimum) at the position in the equilibrium state (at a vibration angle $\theta$ of 0° in FIG. 11) as indicated by the broken line in FIG. 11, and the ratio (Fr/Fc) of the restoring force Fr to the centrifugal force Fc is increased as the vibration angle $\theta$ becomes larger (as the crank member 22 approaches an end portion of the swing range).

In the vibration damping device 20 which meets the relationship L1 + L2 > L3 + L4, in contrast, a component force of the centrifugal force which acts on the crank member 22 in a direction that is orthogonal to the direction from the center of the first coupling shaft A1 toward the center of gravity G of the crank member 22 in the equilibrium state illustrated in FIG. 6B is more than zero. That is, in the vibration damping device 20, the restoring force Fr which acts on the crank member 22 which is swung between the position in the equilibrium state and the turn-back position is maximum at the position in the equilibrium state (at a vibration angle $\theta$ of 0° in FIG. 11), and reduced as the vibration angle $\theta$ becomes larger, as indicated by the solid line in FIG. 11. In other words, a restoring force does not act on each of the crank members 22 momentarily when the equilibrium state is established while the crank members 22 and the inertial mass body 24 are swung within their respective swing ranges in the vibration damping device according to the comparative example, whereas a restoring force that acts to return the mass body 24 to the position in the equilibrium state, that is, the center of the swing range, always acts on each of the crank members 22 while the crank members 22 and the inertial mass body 24 are swung within their respective swing ranges in the vibration damping device 20.

In addition, in the vibration damping device 20, as discussed above, while each of the crank members 22 makes motion of moving from the position in the equilibrium state to the turn-back position and returning from the turn-back position to the position in the equilibrium state twice, the inertial mass body 24 moves from the position in the equilibrium state to one end of the swing range, thereafter returns to the position in the equilibrium state, further moves to the other end of the swing range, and thereafter returns to the position in the equilibrium state. Thus, the vibration angle $\theta$, that is, the swing range, of the crank member 22 about the first coupling shaft A1 which matches vibration transferred to the driven member 15 is small compared to the inertial mass body 24. That is, in the vibration damping device 20, motion of the connecting rods 23 and the inertial mass body 24 is similar to motion of two links that constitute a toggle mechanism, which significantly restricts swing of the crank members 22 compared to the inertial mass body 24 as seen from FIGS. 6A, 6B, and 6C.

As a result, in the vibration damping device 20, as indicated in FIG. 11, the swing range of the crank member 22 is a narrow range to a position at which the crank member 22 has been vibrated by a relatively small angle from the position in the equilibrium state ($\theta$ = 0°), and a component force of the centrifugal force Fc, that is, the restoring force Fr, is maximum in the equilibrium state in which the inertial mass body 24 is positioned at the center of the swing range. Thus, it is possible to increase the restoring force Fr (ratio Fr/Fc) for the same centrifugal force Fc which acts on the crank member 22 over the entire swing range of the crank member 22 compared to a case where a component force of the centrifugal force Fc which acts on the crank member 22 in a direction that is orthogonal to the direction from the center of the first coupling shaft A1 toward the center of gravity G of the crank member 22 is zero in the equilibrium state (the vibration damping device according to the comparative example). Specifically, in the vibration damping device 20, the direction of the restoring force Fr (= Fc·sin$\phi$) which acts on the center of gravity G of the crank member 22 can be made closer to the direction of the centrifugal force Fc by approximating the angle $\phi$ indicated in FIG. 7 to 90°. In a state that is close to the equilibrium state illustrated in FIG. 7, in particular, the direction of the restoring force Fr is very close to the direction of the centrifugal force Fc (the angle $\phi$ is closer to 90°). The fact that a larger restoring force Fr may be applied to the crank member 22 (and the inertial mass body 24) means that the vibration damping device 20 has high torsional rigidity. Thus, with the vibration damping device 20, it is possible to increase an equivalent rigidity K while suppressing an increase in weight of the crank member 22.

In addition, while the inertial mass body 24 is swung about the center of rotation RC within the swing range which is centered on the position in the equilibrium state, the crank member 22 is swung about the first coupling shaft A1 between the position in the equilibrium state and the turn-back position at which the crank member 22 has been rotated in one direction about the first coupling shaft A1 from the position in the equilibrium state. That is, in the vibration damping device 20, as illustrated in FIGS. 6A, 6B, and 6C, while the inertial mass body 24 is always rotated in the direction opposite to (in the phase opposite to) the driven member 15 about the center of rotation RC, the crank member 22 is not only rotated in the direction opposite to (in the phase opposite to) the driven member 15, but also rotated in the same direction as (in the same phase as) the driven member 15, about the first coupling shaft A1. Consequently, the effect of the weight of the crank member 22 on an equivalent mass M of the vibration damping device 20 can be made very small.

Thus, with the vibration damping device 20, it is possible to further improve the degree of freedom in setting of the equivalent rigidity K and the equivalent mass M, that is, the vibration order q = √(K/M), which allows improving the vibration damping performance significantly well while suppressing an increase in weight or size of the crank member 22 and hence the entire device. In the vibration damping device which meets the relationship L1 + L2 < L3 + L4 such as the damper device described in Patent Document 1, as illustrated in FIGS. 10A, 10B, and 10C, the crank member 22 is always rotated in the direction opposite to the driven member 15 about the first coupling shaft A1 as with the inertial mass body 24. Thus, with the damper device described in Patent Document 1, the weight of the crank member 22 greatly affects both the equivalent rigidity K and the equivalent mass M, and thus it is not easy to improve the degree of freedom in setting of the vibration order q as with the vibration damping device 20 according to the present embodiment.

In addition, an analysis conducted by the inventors has revealed that the equivalent rigidity K of the vibration damping device 20 is inversely proportional to the square value of a ratio ρ = L3/(L3 + L4) of the interaxial distance L3 to the sum of the interaxial distances L3 and L4. Thus, it is possible to increase the equivalent rigidity K while suppressing an increase in weight of the crank member 22 by making the interaxial distance L3 between the second coupling shaft A2 and the third coupling shaft A3 shorter than the interaxial distance L1 between the center of rotation RC and the first coupling shaft A1, the interaxial distance L2 between the first coupling shaft A1 and the second coupling shaft A2, and the interaxial distance L4 between the third coupling shaft A3 and the center of rotation RC as discussed above. Additionally, the vibration angle of the crank member 22 about the first coupling shaft A1 can be further reduced by making the interaxial distance L3 shorter. Consequently, it is possible to further reduce the effect of the weight of the crank member 22 on the equivalent mass M, and to make the entire device compact by causing an end portion of the crank member 22 on the opposite from the first coupling shaft A1 to be moved toward the center of rotation RC (or reducing the amount of projection toward the radially outer side as much as possible).

In the vibration damping device 20, further, the interaxial distance L1 between the center of rotation RC and the first coupling shaft A1 is determined to be longer than the interaxial distances L2, L3, and L4. Consequently, the center of gravity G (second coupling shaft A2) of the crank member 22 can be positioned on the radially outer side with the crank member 22 spaced away from the center of rotation RC of the driven member 15. Thus, it is possible to secure a sufficient space for arrangement of the springs SP of the damper device 10, and to increase a component force of the centrifugal force Fc that acts on the crank member 22, that is, the restoring force Fr, without increasing the weight of the crank member 22.

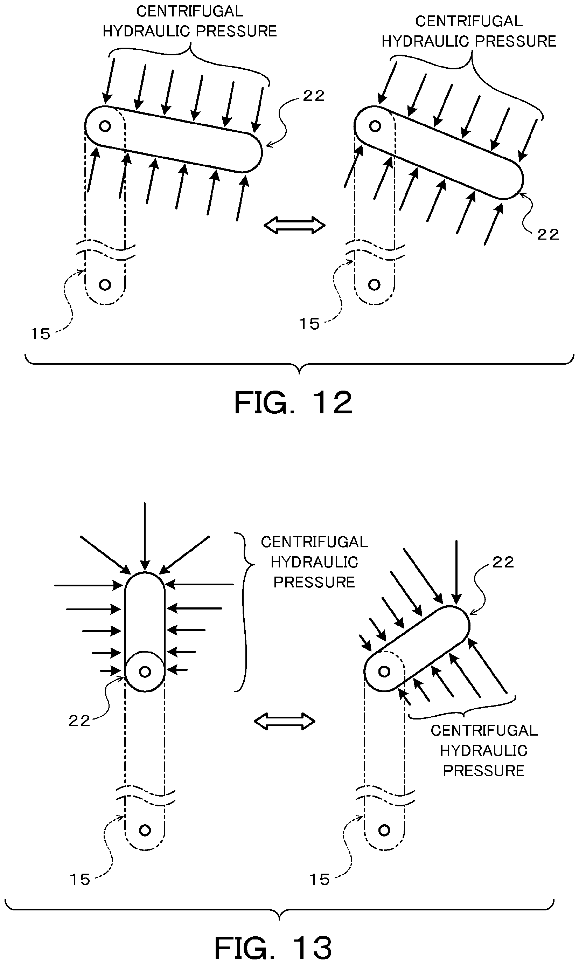

In addition, by making the interaxial distance L1 the longest while meeting the relationship L1 + L2 > L3 + L4, the crank member 22 can be disposed along a circumference that passes through the center of the first coupling shaft A1 and that is centered on the center of rotation RC, and the vibration angle of the crank member 22 about the first coupling shaft A1 can be reduced. Consequently, as seen from FIG. 12, it is possible to reduce the effect of a force due to a centrifugal hydraulic pressure that acts on the crank member 22 in the fluid transmission chamber 9 which is filled with working oil on the restoring force Fr, and to reduce fluctuations in force due to the centrifugal hydraulic pressure which is caused when the crank member 22 is swung, compared to the vibration damping device (see FIG. 13) which meets the relationship L1 + L2 < L3 + L4 such as the damper device described in Patent Document 1. Additionally, it is possible to reduce the effect of the force due to the centrifugal hydraulic pressure which acts on the crank member 22 on the restoring force Fr well by constituting the crank member 22 using two plate members 220 which have an arcuate planar shape as in the present embodiment.

By configuring the vibration damping device 20 so as to meet L1 > L4 > L2 > L3, practically good equivalent rigidity K can be secured, and the effect of the weight of the crank member 22 on the equivalent mass M can be reduced to be practically ignorable. As a result, it is possible to damp vibration significantly well by easily causing the vibration order q of the vibration damping device 20 to coincide with (approximate) the order of vibration to be damped. The maximum vibration angle (swing limit) of each of the crank members 22 and the maximum swing range of the inertial mass body 24 are determined from the interaxial distances L1, L2, L3, and L4. Thus, the interaxial distances L1, L2, L3, and L4 of the vibration damping device 20 are preferably determined in consideration of the amplitude (vibration level) of vibration transferred to the driven member 15 so that the vibration damping device 20 do not fail to damp vibration transferred to the driven member 15.

In addition, the vibration damping device 20 is configured so as to meet $60° \leq \alpha \leq 120°$, more preferably $70° \leq \alpha \leq 90°$, when the angle formed by the direction from the center of the first coupling shaft A1 toward the center of the second coupling shaft A2 and the direction from the center of the second coupling shaft A2 toward the center of rotation RC in the equilibrium state in which the center of the second coupling shaft A2, the center of the third coupling shaft A3, and the center of rotation RC of the driven member 15 are positioned on one line is defined as "$\alpha$". Consequently, the inertial mass body 24 can be prevented from being swung greatly to one side of the swing range to reach the swing limit (dead center) on the one side and being swung slightly to the other side when the rotational speed of the driven member 15 is low. As a result, it is possible to improve the vibration damping performance of the vibration damping device 20 by causing the inertial mass body 24 to be swung symmetrically with respect to the position in the equilibrium state (see FIG. 6B) since the time when the rotational speed of the driven member 15 is relatively low.

By rotatably supporting (aligning) the inertial mass body 24 which is annular using the driven member 15 as in the present embodiment, further, it is possible to make the vibration damping device 20 compact, and to smoothly swing the inertial mass body 24 about the center of rotation RC of the driven member 15 (rotary element) when the crank members 22 are swung. In addition, the effect of the centrifugal force and the centrifugal liquid pressure which act on the inertial mass body 24 on swing of the inertial mass body 24 can be eliminated by forming the inertial mass body 24 to be annular. By disposing the inertial mass body 24 which is annular on the radially outer side of the driven member 15, additionally, it is possible to increase the moment of inertia of the inertial mass body 24 while suppressing an increase in weight of the inertial mass body 24, and to suppress an increase in axial length of the vibration damping device 20.

It has been revealed that, in the vibration damping device 20 discussed above, there occurs a deviation between an order (hereinafter referred to as a "target order") qtag of vibration to be originally intended to be damped by the vibration damping device 20 and the order (hereinafter referred to as an "effective order") of vibration to be actually damped by the vibration damping device 20 when the vibration angle (swing range) of the inertial mass body 24 becomes large. In the vibration damping device 20, in addition, when a state in which the inertial mass body 24 has been rotated by a certain initial angle (corresponding to the vibration angle of the inertial mass body 24 about the center of rotation) about the center of rotation from the position in the equilibrium state is defined as an initial state, the inertial mass body 24 etc. are swung at a frequency that matches the initial angle in the case where torque that does not contain a vibration component is applied to the driven member 15 to rotate the driven member 15 at a constant rotational speed.

In the light of the above, in order to suppress the order deviation discussed above by adjusting the ratio $\rho = L3/(L3 + L4)$ of the interaxial distance L3 to the sum of the interaxial distances L3 and L4, the inventors prepared a plurality of models of the vibration damping device 20 that have different ratios ρ, and performed a simulation in which torque that did not contain a vibration component was applied to the driven member 15 for each of a plurality of initial angles (vibration angles) for each of the models to rotate the driven member 15 at a constant rotational speed (e.g. 1000 rpm). All the plurality of models used in the simulation were prepared to damp vibration with a target order qtag = 2 of four-cylinder engines, and met the relationship Lg = L2. By performing such a simulation, the inventors calculated an effective order for each vibration angle (initial angle) of the inertial mass body 24 on the basis of a difference (amount of deviation) between the frequency of swing of the inertial mass body 24 and a theoretical value (33.3 Hz with a target order qtag = 2 and at a rotational speed of 1000 rpm) for each of the models (ratio ρ).

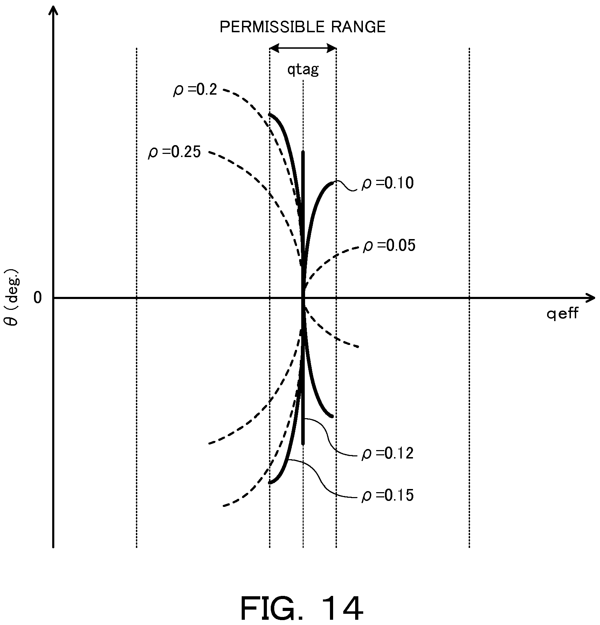

FIG. 14 illustrates the results of analyzing the relationship between a vibration angle θ of the inertial mass body 24 about the center of rotation RC and an effective order qeff for the plurality of models of the vibration damping device 20 (ratio ρ). As indicated in the drawing, for a model with a ratio $\rho = 0.05$, an order deviation occurred when the vibration angle θ of the inertial mass body 24 about the center of rotation RC was significantly small, and the amount of deviation of the effective order qeff from the target order qtag went out of the permissible range before the vibration angle θ reached the maximum vibration angle. Similarly for a model with a ratio $\rho = 0.25$, an order deviation occurred when the vibration angle θ of the inertial mass body 24 about the center of rotation RC was relatively small, and the amount of deviation of the effective order qeff from the target order qtag went out of the permissible range before the vibration angle θ reached the maximum vibration angle.

For a model with a ratio $\rho = 0.20$, meanwhile, there occurred an order deviation when the vibration angle θ of the inertial mass body 24 about the center of rotation RC became large, but the amount of deviation of the effective order qeff from the target order qtag was included in the permissible range over a relatively wide range of the swing range (between the maximum vibration angles). For models with a ratio $\rho = 0.10$ and 0.15, in addition, the amount of deviation of the effective order qeff from the target order qtag was included in the permissible range over the entire range of the vibration angle θ. For a model with a ratio $\rho = 0.12$, further, the effective order qeff generally coincided with the target order qtag over the entire range of the vibration angle θ. Thus, it is understood that, by configuring the vibration damping device 20 so as to meet the relationship $0.1 \leq \rho = L3/(L3 + L4) \leq 0.2$, more preferably $0.1 \leq \rho \leq 0.15$, the vibration damping performance of the vibration damping device 20 may be improved better by reducing variations in the effective order qeff (order deviation) at the time when the vibration angle $\theta$ of the inertial mass body 24 about the center of rotation RC is large.

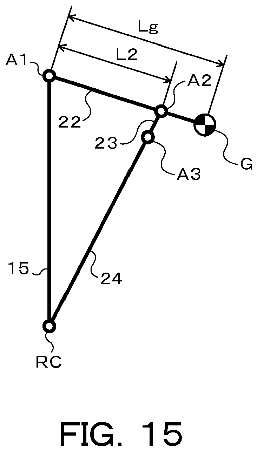

By causing the length Lg from the center of the first coupling shaft A1 to the center of gravity G of the crank member 22 to coincide with the interaxial distance L2 between the first coupling shaft A1 and the second coupling shaft A2 as in the vibration damping device 20, it is possible to reduce the load (burden) which acts on the support portion (bearing portion) of the first coupling shaft A1. It should be noted, however, that it is not necessary that the length Lg and the interaxial distance L2 should coincide with each other. That is, the vibration damping device 20 may be configured so as to meet the relationship Lg > L2 as illustrated in FIG. 15. Consequently, although the load (burden) which acts on the support portion (bearing portion) of the first coupling shaft A1 is increased compared to a case where the relationship Lg = L2 is met, it is possible to further increase the restoring force Fr which acts on the crank member 22 using leverage. In the example illustrated in FIG. 15, in addition, the center of gravity G of the crank member 22 is positioned on a line that passes through the centers of the first and second coupling shafts A1 and A2. However, it is not necessary that the center of gravity G should be positioned on the line which passes through the centers of the first and second coupling shafts A1 and A2. It should be understood that, even in the case where the center of the second coupling shaft A2 and the center of gravity G of the crank member 22 do not extend coaxially with each other, a component force of the centrifugal force which acts on the crank member 22 in a direction that is orthogonal to the direction from the center of the first coupling shaft A1 toward the center of the second coupling shaft A2 is also larger than zero if the restoring force Fr which acts on the center of gravity G of the crank member 22 in the equilibrium state is larger than zero.

In the vibration damping device 20, in addition, the inertial mass body 24 which is annular may be replaced with a plurality of (e.g. four) mass bodies that have the same specifications (such as dimensions and weight) as each other. In this case, the mass bodies may be constituted from metal plates that have an arcuate planar shape, for example, and that are coupled to the driven member 15 via the crank member 22 (two plate members 220) and two connecting rods 23 so as to be arranged at intervals (equal intervals) in the circumferential direction in the equilibrium state and swing about the center of rotation RC. Furthermore, a guide portion that guides each of the mass bodies so as to swing about the center of rotation RC while receiving a centrifugal force (centrifugal hydraulic pressure) that acts on the mass body may be provided at the outer peripheral portion of the driven member 15. Also with the vibration damping device 20 which includes such a plurality of mass bodies, it is possible to improve the degree of freedom in setting of the vibration order q, which allows improving the vibration damping performance while suppressing an increase in weight or size of the crank member 22 and hence the entire device.

Furthermore, the vibration damping device 20 may be coupled to the drive member (input element) 11 of the damper device 10. In addition, the vibration damping device 20 may include a dedicated support member (first link) that constitutes a turning pair with the crank member 22 by swingably supporting the crank member 22 and that constitutes a turning pair with the inertial mass body 24. That is, the crank member 22 may be coupled to a rotary element indirectly via a dedicated support member that serves as the first link. In this case, it is only necessary that the support member of the vibration damping device 20 should be coupled so as to rotate coaxially and together with a rotary element, such as the drive member 11 or the driven member 15 of the damper device 10, for example, vibration of which is to be damped. Also with the thus configured vibration damping device 20, it is possible to damp vibration of a rotary element well.

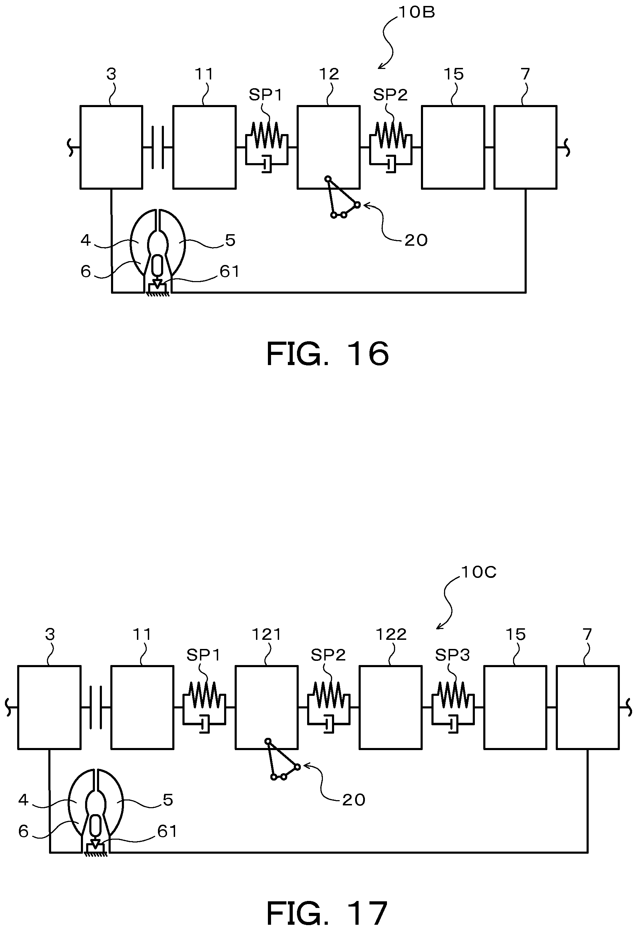

In addition, the vibration damping device 20 may be applied to a damper device 10B illustrated in FIG. 16. The damper device 10B of FIG. 16 includes the drive member (input element) 11, an intermediate member 12 (intermediate element), and the driven member 15 (output element) as rotary elements, and also includes a first spring SP1 disposed between the drive member 11 and the intermediate member 12 and a second spring SP2 disposed between the intermediate member 12 and the driven member 15 as torque transfer elements. In this case, the vibration damping device 20 may be coupled to the intermediate member 12 of the damper device 10B as illustrated in the drawing, or may be coupled to the drive member 11 or the driven member 15.

Furthermore, the vibration damping device 20 may be applied to a damper device 10C illustrated in FIG. 17. The damper device 10C of FIG. 17 includes the drive member (input element) 11, a first intermediate member (first intermediate element) 121, a second intermediate member (second intermediate element) 122, and the driven member (output element) 15 as rotary elements, and also includes a first spring SP1 disposed between the drive member 11 and the first intermediate member 121, a second spring SP2 disposed between the first intermediate member 121 and the second intermediate member 122, and a third spring SP3 disposed between the second intermediate member 122 and the driven member 15 as torque transfer elements. In this case, the vibration damping device 20 may be coupled to the first intermediate member 121 of the damper device 10C as illustrated in the drawing, or may be coupled to the drive member 11, the second intermediate member 122, or the driven member 15. In any case, by coupling the vibration damping device 20 to a rotary element of the damper device 10, 10B, or 10C, it is possible to damp vibration significantly well using both the damper device 10 to 10C and the vibration damping device 20 while suppressing an increase in weight of the damper device 10 to 10C.

As has been described above, the present disclosure provides a vibration damping device (20) that includes: a support member (15) that rotates together with a rotary element (15), to which torque from an engine is transferred, about a center of rotation (RC) of the rotary element (15); a restoring force generation member (22) that is coupled to the support member (15) via a coupling shaft (A1) and that is swingable about the coupling shaft (A1) along with rotation of the support member (15); and an inertial mass body (24) coupled to the support member (15) via the restoring force generation member (22) and swung about the center of rotation (RC) in conjunction with the restoring force generation member (22) along with rotation of the support member (15), the vibration damping device (20) damping vibration of the rotary element (15), in which when the support member (15) is rotated, a component force of a centrifugal force that acts on the restoring force generation member (22) along with rotation of the support member (15) in a direction that is orthogonal to a direction from a center of the coupling shaft (A1) toward a center of gravity (G) of the restoring force generation member (22) always acts on the restoring force generation member (22) as a restoring force that acts to return the inertial mass body (24) to a center of a swing range, and the component force is maximum when the inertial mass body (24) is positioned at the center of the swing range.

In the vibration damping device, a component force of a centrifugal force that acts on the restoring force generation member along with rotation of the support member in a direction that is orthogonal to the direction from the center of the coupling shaft toward the center of gravity of the restoring force generation member acts as a restoring force (moment) that acts to return the inertial mass body to the center of the swing range. The component force is maximum when the inertial mass body is positioned at the center of the swing range. Consequently, the restoring force for the same centrifugal force which acts on the restoring force generation member can be increased over the entire swing range of the restoring force generation member compared to a case where the component force of the centrifugal force which acts on the restoring force generation member in a direction that is orthogonal to the direction from the center of the coupling shaft toward the center of gravity of the restoring force generation member is zero when the inertial mass body is positioned at the center of the swing range. Thus, with the vibration damping device, it is possible to increase the equivalent rigidity of the vibration damping device while suppressing an increase in weight of the restoring force generation member, which can improve the degree of freedom in setting of the equivalent rigidity and the equivalent mass, that is, the vibration order. As a result, it is possible to further improve the vibration damping performance while suppressing an increase in weight or size of the restoring force generation member and hence the entire device.

The restoring force generation member (22) may be swung about the coupling shaft (A1) between a position in an equilibrium state, in which the inertial mass body (24) is positioned at the center of the swing range, and a turn-back position, at which the inertial mass body (24) has been rotated in one direction about the coupling shaft (A1) from the position in the equilibrium state. That is, in such a vibration damping device, the inertial mass body is always rotated in the direction opposite to (in the phase opposite to) the rotary element (support member) about the center of rotation, whereas the restoring force generation member is not only rotated in the direction opposite to (in the phase opposite to) the rotary element etc. about the coupling shaft, but also rotated in the same direction as (in the same phase as) the rotary element etc. Consequently, it is possible to reduce the effect of the weight of the restoring force generation member on the equivalent mass of the vibration damping device.

While the restoring force generation member (22) makes motion of moving from the position in the equilibrium state to the turn-back position and returning from the turn-back position to the position in the equilibrium state twice, the inertial mass body (24) may move from the position in the equilibrium state to one end of the swing range, thereafter return to the position in the equilibrium state, further move to the other end of the swing range, and thereafter return to the position in the equilibrium state. Consequently, it is possible to reduce the vibration angle (swing range) of the restoring force generation member about the coupling shaft, and to increase the restoring force which acts on the restoring force generation member (and the inertial mass body) which is swung.

The vibration damping device (20) may further include a connecting member (23) rotatably coupled to the restoring force generation member (22) via a second coupling shaft (A2) and rotatably coupled to the inertial mass body (24) via a third coupling shaft (A3); and when an interaxial distance between the center of rotation (RC) of the rotary element (15) and the coupling shaft (A1) is defined as "L1", an interaxial distance between the coupling shaft (A1) and the second coupling shaft (A2) is defined as "L2", an interaxial distance between the second coupling shaft (A2) and the third coupling shaft (A3) is defined as "L3", and an interaxial distance between the third coupling shaft (A3) and the center of rotation (RC) is defined as "L4", L1 + L2 > L3 + L4 may be met.

In such a vibration damping device, the support member, the restoring force generation member, the connecting member, and the inertial mass body constitute a four-node rotary link mechanism in which the support member (rotary element) serves as a fixed node, and a restoring force (moment) that acts to return the inertial mass body to the center of the swing range (position in the equilibrium state) acts on the restoring force generation member which is swung with respect to the support member. By configuring the vibration damping device so as to meet the relationship L1 + L2 > L3 + L4, the angle which is formed by the direction of the centrifugal force which acts on the restoring force generation member and the direction from the center of the coupling shaft, which couples the support member and the restoring force generation member to each other, toward the center of gravity of the restoring force generation member can be approximated to 90°. That is, with the vibration damping device, it is possible to approximate the direction of the restoring force which acts on the restoring force generation member (a component force of the centrifugal force) to the direction of the centrifugal force. Consequently, the restoring force for the same centrifugal force which acts on the restoring force generation member can be increased compared to a case where the relationship L1 + L2 > L3 + L4 is not met, which makes it possible to increase the equivalent rigidity of the vibration damping device while suppressing an increase in weight of the restoring force generation member. In the case where the relationship L1 + L2 > L3 + L4 is met, further, swing of the restoring force generation member is restricted (the vibration angle is reduced) compared to the inertial mass body, and the inertial mass body is always rotated in the direction opposite to (in the phase opposite to) the rotary element (support member) about the center of rotation, whereas the restoring force generation member is not only rotated in the direction opposite to (in the phase opposite to) the rotary element about the first coupling shaft, but also rotated in the same direction as (in the same phase as) the rotary element. Consequently, the effect of the weight of the restoring force generation member on the equivalent mass of the vibration damping device can be made very small, which can improve the degree of freedom in setting of the equivalent rigidity and the equivalent mass, that is, the vibration order. As a result, it is possible to further improve the vibration damping performance significantly well while suppressing an increase in weight or size of the restoring force generation member and hence the entire device. The vibration damping device according to the present disclosure may be configured such that a component force of a centrifugal force that acts on the restoring force generation member along with rotation of the support member in a direction that is orthogonal to the direction from the center of the coupling shaft toward the center of the second coupling shaft is larger than zero in the equilibrium state in which the inertial mass body is positioned at the center of the swing range.

The interaxial distance L3 may be shorter than the interaxial distances L1, L2, and L4. That is, the equivalent rigidity of the vibration damping device discussed above is inversely proportional to the square value of the ratio (L3/(L3 + L4)) of the interaxial distance L3 to the sum of the interaxial distances L3 and L4. Thus, by making the interaxial distance L3 shorter than the interaxial distances L1, L2, and L4, it is possible to increase the equivalent rigidity while suppressing an increase in weight of the restoring force generation member. Additionally, the vibration angle of the restoring force generation member can be further reduced by making the interaxial distance L3 shorter, which makes it possible to further reduce the effect of the weight of the restoring force generation member on the equivalent mass, and to make the entire device compact.

The interaxial distance L1 may be longer than the interaxial distances L2, L3, and L4. Consequently, the center of gravity of the restoring force generation member can be positioned on the radially outer side with the restoring force generation member spaced away from the center of rotation of the rotary element, which makes it possible to increase the component force of the centrifugal force which acts on the restoring force generation member, that is, the restoring force. Additionally, by making the interaxial distance L1 the longest while meeting the relationship L1 + L2 > L3 + L4, the restoring force generation member can be disposed along a circumference that passes through the center of the coupling shaft and that is centered on the center of rotation of the rotary element, and the vibration angle of the restoring force generation member can be reduced. Consequently, in the case where the vibration damping device is disposed in oil, it is possible to reduce the effect of a force due to a centrifugal hydraulic pressure that acts on the restoring force generation member on the restoring force, and to reduce fluctuations in force due to the centrifugal hydraulic pressure which is caused when the restoring force generation member is swung.

The vibration damping device (20) may be configured such that L1 > L4 > L2 > L3 is met. Consequently, it is possible to secure practically good equivalent rigidity of the vibration damping device, and to reduce the effect of the weight of the restoring force generation member on the equivalent mass of the vibration damping device to be practically ignorable.

The vibration damping device (20) may be configured such that, when an angle is defined as "α", 60° ≤ α ≤ 120° is met, the angle being formed by a direction from the center of the first coupling shaft (A1) toward a center of the second coupling shaft (A2) and a direction from the center of the second coupling shaft (A2) toward the center of rotation (RC) with the center of the second coupling shaft (A2), a center of the third coupling shaft (A3), and the center of rotation (RC) positioned on one line. Consequently, the inertial mass body can be prevented from being swung greatly to one side of the swing range to reach the swing limit (dead center) on the one side and being swung slightly to the other side when the rotational speed of the rotary element is low. As a result, it is possible to improve the vibration damping performance by causing the inertial mass body to be swung symmetrically with respect to the center of the swing range (position in the equilibrium state) since the time when the rotational speed of the rotary element is relatively low.

The vibration damping device (20) may be configured such that, when a distance from the center of the first coupling shaft (A1) to the center of gravity (G) of the restoring force generation member (22) is defined as "Lg", $Lg \geq L2$ is met. Consequently, it is possible to further increase the restoring force which acts on the restoring force generation member using leverage.

The vibration damping device (20) may be configured such that $Lg = L2$ and $0.1 \leq L3/(L3 + L4) \leq 0.2$ are met. Consequently, it is possible to suppress fluctuations in order of vibration to be damped by the vibration damping device as the vibration angle of the inertial mass body becomes larger, and to improve the vibration damping performance of the vibration damping device.

The restoring force generation member (22) may include at least one plate member (220) that has an arcuate planar shape. Consequently, in the case where the vibration damping device is disposed in oil, it is possible to reduce the effect of a force due to a centrifugal hydraulic pressure that acts on the restoring force generation member on the restoring force well.

The inertial mass body (24) may be an annular member disposed so as to surround the support member (15), and be rotatably supported by the support member (15). When the inertial mass body is rotatably supported by the support member in this way, it is possible to make the vibration damping device compact, and to smoothly swing the inertial mass body about the center of rotation of the rotary element (support member) when the restoring force generation member is swung. In addition, the effect of the centrifugal force (and the centrifugal liquid pressure) which acts on the inertial mass body on swing of the inertial mass body can be eliminated by forming the inertial mass body to be annular. By disposing the inertial mass body which is annular on the radially outer side of the support member, additionally, it is possible to increase the moment of inertia of the inertial mass body while suppressing an increase in weight of the inertial mass body, and to suppress an increase in axial length of the vibration damping device.

The support member (15) may rotate coaxially and integrally with a rotary element of a damper device (10, 10B, 10C) that has a plurality of rotary elements (11, 12, 121, 122, 15) that include at least an input element (11) and an output element (15) and an elastic body (SP, SP1, SP2, SP3) that transfers torque between the input element (11) and the output element (15). By coupling the vibration damping device to the rotary element of the damper device in this way, it is possible to damp vibration significantly well using both the damper device and the vibration damping device while suppressing an increase in weight of the damper device.

The input element (11) of the damper device (10, 10B, 10C) may be functionally (directly or indirectly) coupled to an output shaft of a motor (EG). The output element (15) of the damper device (10, 10B, 10C) may be functionally (directly or indirectly) coupled to an input shaft (Is) of a transmission (TM).

The invention according to the present disclosure is not limited to the embodiment described above in any way, and it is a matter of course that the invention may be modified in various ways without departing from the range of the extension of the present disclosure. Furthermore, the mode for carrying out the invention described above is merely a specific form of the invention described in the "SUMMARY OF THE INVENTION" section, and does not limit the elements of the invention described in the "SUMMARY OF THE INVENTION" section.

INDUSTRIAL APPLICABILITY

The invention according to the present disclosure can be utilized in the field of manufacture of vibration damping devices that damp vibration of a rotary element.

**Claims**

1. A vibration damping device that includes: a support member that rotates together with a rotary element, to which torque from an engine is transferred, about a center of rotation of the rotary element; a restoring force generation member that is coupled to the support member via a coupling shaft and that is swingable about the coupling shaft along with rotation of the support member; and an inertial mass body coupled to the support member via the restoring force generation member and swung about the center of rotation in conjunction with the restoring force generation member along with rotation of the support member, the vibration damping device damping vibration of the rotary element, wherein
   when the support member is rotated, a component force of a centrifugal force that acts on the restoring force generation member along with rotation of the support member in a direction that is orthogonal to a direction from a center of the coupling shaft toward a center of gravity of the restoring force generation member always acts on the restoring force generation member as a restoring force that acts to return the inertial mass body to a center of a swing range, and the component force is maximum when the inertial mass body is positioned at the center of the swing range.

2. The vibration damping device according to claim 1, wherein
   the restoring force generation member is swung about the coupling shaft between a position in an equilibrium state, in which the inertial mass body is positioned at the center of the swing range, and a turn-back position, at which the inertial mass body has been rotated in one direction about the coupling shaft from the position in the equilibrium state.

**3.** The vibration damping device according to claim 2, wherein
while the restoring force generation member makes motion of moving from the position in the equilibrium state to the turn-back position and returning from the turn-back position to the position in the equilibrium state twice, the inertial mass body moves from the position in the equilibrium state to one end of the swing range, thereafter returns to the position in the equilibrium state, further moves to the other end of the swing range, and thereafter returns to the position in the equilibrium state.

**4.** The vibration damping device according to any one of claims 1 to 3, further comprising:

a connecting member rotatably coupled to the restoring force generation member via a second coupling shaft and rotatably coupled to the inertial mass body via a third coupling shaft, wherein when an interaxial distance between the center of rotation of the rotary element and the coupling shaft is defined as "L1", an interaxial distance between the coupling shaft and the second coupling shaft is defined as "L2", an interaxial distance between the second coupling shaft and the third coupling shaft is defined as "L3", and an interaxial distance between the third coupling shaft and the center of rotation is defined as "L4", L1 + L2 > L3 + L4 is met.

**5.** The vibration damping device according to claim 4, wherein
the interaxial distance L3 is shorter than the interaxial distances L1, L2, and L4.

**6.** The vibration damping device according to claim 4 or 5, wherein
the interaxial distance L1 is longer than the interaxial distances L2, L3, and L4.

**7.** The vibration damping device according to any one of claims 4 to 6, wherein
L1 > L4 > L2 > L3 is met.

**8.** The vibration damping device according to any one of claims 4 to 7, wherein
when an angle is defined as "$\alpha$", 60° $\leq \alpha \leq$ 120° is met, the angle being formed by a direction from the center of the coupling shaft toward a center of the second coupling shaft and a direction from the center of the second coupling shaft toward the center of rotation with the center of the second coupling shaft, a center of the third coupling shaft, and the center of rotation positioned on one line.

**9.** The vibration damping device according to any one of claims 1 to 8, wherein

when a distance from the center of the coupling shaft to the center of gravity of the restoring force generation member is defined as "Lg", Lg $\geq$ L2 is met.

**10.** The vibration damping device according to claim 9, wherein

$$Lg = L2 \text{ and } 0.1 \leq L3/(L3 + L4) \leq 0.2$$

are met.

**11.** The vibration damping device according to any one of claims 1 to 10, wherein
the restoring force generation member includes at least one plate member that has an arcuate planar shape.

**12.** The vibration damping device according to any one of claims 1 to 11, wherein
the inertial mass body is an annular member disposed so as to surround the support member, and is rotatably supported by the support member.

**13.** The vibration damping device according to any one of claims 1 to 12, wherein
the support member rotates coaxially and integrally with a rotary element of a damper device that has a plurality of rotary elements that include at least an input element and an output element and an elastic body that transfers torque between the input element and the output element.

**14.** The vibration damping device according to claim 13, wherein
the input element of the damper device is functionally coupled to an output shaft of a motor.

**15.** The vibration damping device according to claim 13 or 14, wherein
the output element of the damper device is functionally coupled to an input shaft of a transmission.

FIG. 1

EP 3 284 969 A1

FIG. 2

FIG. 3

FIG. 4

FIG. 5

FIG. 6A

FIG. 6B

FIG. 6C

$$Fr = m \cdot \overline{RC\ G} \cdot \omega^2 \sin\phi$$

$$Fc = m \cdot \overline{RC\ G} \cdot \omega^2$$

A1

L2

$\phi$

22

A2 (G)

L3

23

A3

L1

L4

$$L1+L2>L3+L4$$

15

24

RC

# FIG. 7

23

FIG. 8

$$Fc = m \cdot \overline{RC\ G} \cdot \omega^2$$

$$Fr = m \cdot \overline{RC\ G} \cdot \omega^2 \sin\phi$$

$\phi$

L3

L2

A2(G)

23

A1

22

A3

L1

L4

$$L1 + L2 < L3 + L4$$

15

24

RC

# FIG. 9

FIG. 10A

FIG. 10B

FIG. 10C

FIG. 11

CENTRIFUGAL
HYDRAULIC PRESSURE

CENTRIFUGAL
HYDRAULIC PRESSURE

22

22

15

15

# FIG. 12

CENTRIFUGAL
HYDRAULIC
PRESSURE

22

22

CENTRIFUGAL
HYDRAULIC
PRESSURE

15

15

# FIG. 13

PERMISSIBLE RANGE

qtag

$\rho$ =0.2

$\rho$ =0.25

$\rho$ =0.10

$\rho$ =0.05

$\theta$ (deg.)

0

qeff

$\rho$ =0.12

$\rho$ =0.15

FIG. 14

FIG. 15

FIG. 16

FIG. 17

**EP 3 284 969 A1**

## INTERNATIONAL SEARCH REPORT

International application No.

PCT/JP2016/070994

### A. CLASSIFICATION OF SUBJECT MATTER
*F16F15/14*(2006.01)i, *F16F15/31*(2006.01)i

According to International Patent Classification (IPC) or to both national classification and IPC

### B. FIELDS SEARCHED

Minimum documentation searched (classification system followed by classification symbols)
F16F15/14, F16F15/31

Documentation searched other than minimum documentation to the extent that such documents are included in the fields searched
Jitsuyo Shinan Koho       1922-1996    Jitsuyo Shinan Toroku Koho    1996-2016
Kokai Jitsuyo Shinan Koho  1971-2016    Toroku Jitsuyo Shinan Koho    1994-2016

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 1-312246 A (Nissan Motor Co., Ltd.), 18 December 1989 (18.12.1989), page 4, lower right column, line 7 to page 5, lower right column, line 12; fig. 1 to 2 (Family: none) | 1-15 |
| A | JP 2001-263424 A (Valeo Unisia Transmission Kabushiki Kaisha), 26 September 2001 (26.09.2001), paragraphs [0005] to [0011]; fig. 1 (Family: none) | 1-15 |
| A | US 5836217 A (FICHTEL & SACHS AG), 17 November 1998 (17.11.1998), fig. 1 to 5 & GB 2315112 A       & DE 19627764 A1 & FR 2751043 A1 | 1-15 |

☐ Further documents are listed in the continuation of Box C.     ☐ See patent family annex.

| | |
|---|---|
| *     Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 13 September 2016 (13.09.16) | 27 September 2016 (27.09.16) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |

Form PCT/ISA/210 (second sheet) (January 2015)

32

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001263424 A